# EUROPEAN PATENT APPLICATION

(11) **EP 4 685 444 A1**
(43) Date of publication of application: **28.01.2026**
(21) Application number: 24461602.5
(22) Date of filing: 26.07.2024
(51) Int. Cl.: G01F 23/296, G01F 23/2962

(54) **FILL LEVEL SENSOR ASSEMBLY**

(71) Applicant: B/E Aerospace, Inc., Winston-Salem, NC 27105 (US)
(72) Inventor: KROCZEK, Piotr Jacek, 51-317 Wroclaw (PL); HOMA, Monika Magdalena, 51-317 Wroclaw (PL); HOMA, Dariusz Sebastian, 51-317 Wroclaw (PL)
(74) Representative: Dehns

(57) **Abstract**

A fill level sensor assembly for detecting a level of content in a reservoir (1), the assembly comprising: a housing (104) configured to be mounted to the reservoir; a tape (102) having a length from a first end (102a) to a second end (102b); a holder (103) in the housing for securing the first end of the tape in the housing; a level sensor (101) attached to the second end of the tape; the tape configured to be stowed with the first and second ends and the level sensor in the housing, in a first state, and to be deployed to release the second end and the sensor and a portion of the length of the tape from the housing; and measuring means (107, 108) to measure the length of the released portion of the length of the tape.

## Description

### TECHNICAL FIELD

This disclosure relates to level sensors, particularly for sensing the level of content in a container such as, but not exclusively, for detecting a level of waste in a waste tank e.g. a waste tank in an aircraft sanitation system.

### BACKGROUND

Various technologies are known for sensing or detecting a level of content in a container e.g. to be able to detect when the content is at or approaching a threshold level in the container (e.g. too full or too empty, depending on the application or use). For example, electrical or mechanical sensors are known that can provide an indication of a level of fullness of the content in the container.

One example where such level sensors are known is in a reservoir or tank containing fluid, where it is necessary to know when the reservoir or tank is close to or at a predetermined maximum fullness, so that it can, for example, be emptied or flow to the tank can be regulated e.g. to prevent overflow. Level sensors are used, for example, to detect the level of waste in a waste collection tank e.g. in a sanitary system. Such waste tanks are used, for example, on aircraft, where the sanitary waste is collected in the tank and the tank is emptied at appropriate times. There are reasons for needing to know if the tank is becoming too full so that it can be emptied or the flow of waste into the tank can be regulated to avoid overflow.

Typically, point level sensors, PLS, are installed at appropriate locations in the reservoir corresponding to a fill level to be detected. When the level of matter in the reservoir reaches the location of the sensor, the sensor is triggered to indicated that the respective fill level has been reached. For example, if the specification requires the sensor to indicate when the reservoir is, say, 70% full, the sensor will be positioned in the reservoir to be contacted by the content of the reservoir at the 70% level. Typical sensors use e.g. an ultrasonic piezoelectric transceiver which transmits a series of ultrasonic pulses. A microcontroller within the PLS monitors for the return of the pulses. The PLS registers that the desired fill level has been reached when the sensor is immersed in/in contact with the matter in the reservoir. Before the matter has reached the level of the sensor, the sensor returns a 'dry' state.

Sometimes there is a requirement for a reservoir to include two or more sensors to indicate two or more different fill levels. More sensors add to the cost and weight of the reservoir. Further, customers for reservoirs may specify different fill levels to be detected. This means that the reservoir design, with respect to the sensors, needs to be different for each customer/application. This is time and cost intensive.

There is, therefore, a desire for a fill level sensor assembly that is simple, lightweight, reliable, effective and efficient and can be used to measure a wide range of fill levels.

### SUMMARY

According to one aspect, there is provided a fill level sensor assembly for detecting a level of content in a reservoir, the assembly comprising: a housing configured to be mounted to the reservoir; a tape having a length from a first end to a second end; a holder in the housing for securing the first end of the tape in the housing; a sensor attached to the second end of the tape; the tape configured to be stowed with the first and second ends and the sensor in the housing, in a first state, and to be deployed to release the second end and the sensor and a portion of the length of the tape from the housing; and measuring means to measure the length of the released portion of the length of the tape.

The holder may be a roller to which the first end of the tape is attached, wherein rotation of the roller in a first direction winds the length of the tape around the roller to stow the tape and level sensor in the housing and rotation of the roller in the opposite direction unwinds the tape to deploy the level sensor from the housing.

A drive such as an electric motor may cause rotation of the roller.

The measuring means may include a sensor e.g. an optical sensor configured to sense features on the holder and/or the tape indicative of a length of tape deployed, e.g. markings on the holder and/or on the tape, or holes along the length of the tape.

The level sensor e.g. an ultrasonic transceiver, may be configured to provide a sense indication when in contact with matter in the reservoir.

A reservoir for receiving and storing content, the reservoir including an assembly as described above, mounted thereto, is also provided.

The reservoir may be e.g. a tank for collection of waste e.g. so-called grey water from a sanitary system.

### BRIEF DESCRIPTION

Examples of the level sensor according to this disclosure will now be described with reference to the drawings. It should be noted that these are examples only and that variations are possible within the scope of the claims.
Figure 1 shows an example of a typical waste tank with conventional fill level sensors, for the purposes of explanation.
Figure 2A shows a waste tank with a fill level assembly according to this disclosure, in a first state.
Figure 2B shows a waste tank with a fill level assembly according to this disclosure, in a second state.
Figure 2C shows a waste tank with a fill level assembly according to this disclosure, in a third state.
Figure 3 shows a sectional view of a fill level sensor assembly according to the disclosure.
Figure 4 shows a 3D view of a fill level sensor assembly according to the disclosure.
Figure 5 shows a side view of a fill level sensor assembly according to the disclosure.
Figure 6 shows an end view of a fill level sensor assembly according to the disclosure.
Figure 7 shows an example of the detection part of a fill level sensor assembly according to the disclosure.
Figures 8A and 8B show, respectively, a side and sectional view of an alternative example of the detection part of a fill level sensor assembly according to the disclosure.

### DETAILED DESCRIPTION

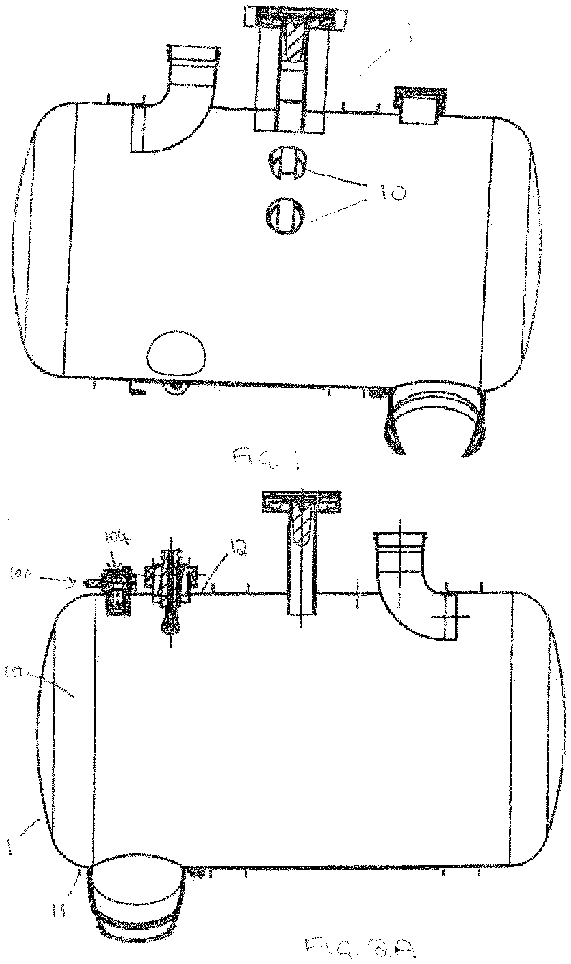

An example of an existing fill level detecting arrangement will be described briefly with reference to Fig. 1.

Fig. 1 shows an example of a reservoir in the form of a tank 1 of the type typically used for collecting waste (also known as grey water in sanitation systems). The fill-level sensor assembly is installed in the tank at a location where it comes into contact with/is immersed in the waste content when the content has reached the level to be detected. In the example shown, there is a requirement to sense when the tank 1 is, say, 70% full and 100% full, and so has two level sensors 10 at appropriate heights on the tank. The level sensors 4 may be ultrasonic sensors mounted to the outside of the tank, which emit ultrasonic waves through the waste and detect reflected waves to detect the content level. As mentioned above, such sensors only detect a specific predetermined level, and need to be replaced/modified if requirements change.

Whilst the problems have been described with reference to waste tanks and with ultrasound sensors, similar problems may arise when sensing any content of any type of container and using any known type of sensor.

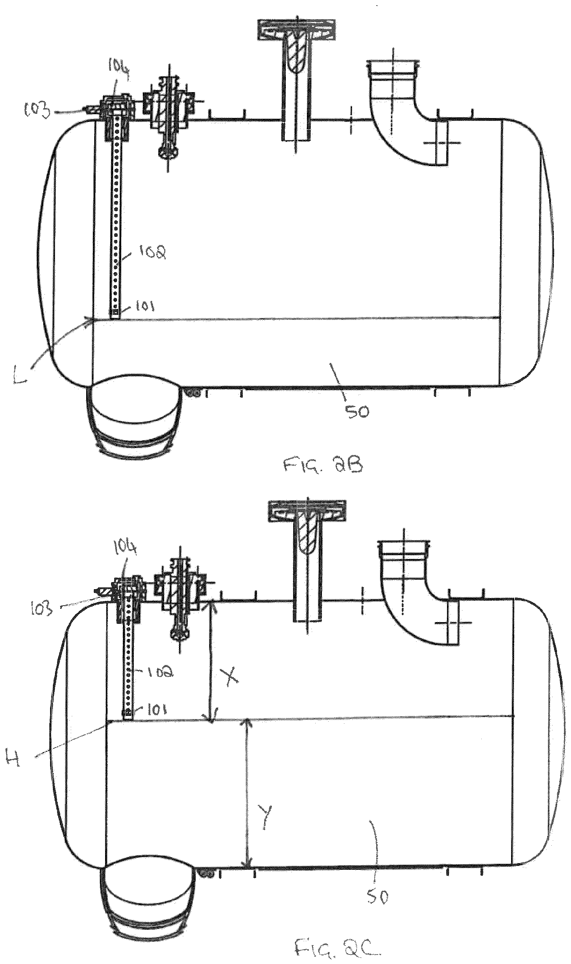

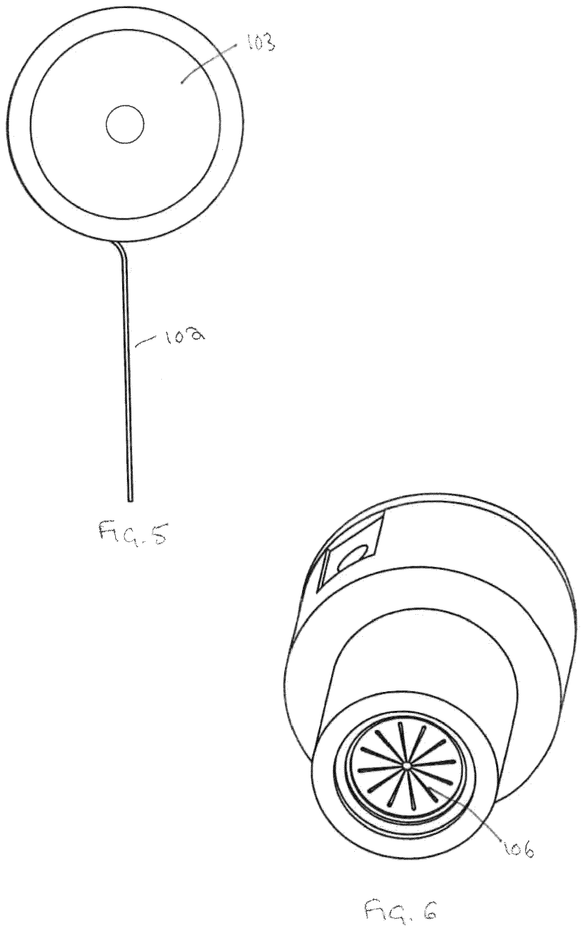

The fill-level sensor assembly according to the present disclosure is able to detect a full range of fill levels in real time. An example of the assembly will be described in detail with reference to Figs. 2 to 8.

In the example shown, the reservoir is a tank 1 similar to the tank shown in Fig. 1, but the fill level sensor assembly can be used in other tanks or containers.

The fill level sensor assembly 100 comprises a sensor 101 attached to one end 102b of a tape 102 which is affixed, at its opposite end 102a, to a holder 103 e.g. a roller, inside an assembly housing 104. The sensor 101 is deployed by releasing, e.g. unrolling, the tape from the housing, thus lowering the sensor from the housing until it contacts the matter 50 in the reservoir whose level is to be detected. The first end 102a of the tape remains attached to the holder 103 in the assembly housing. The distance the sensor 101 has travelled from the housing, measured from the portion of the length of the tape that has dropped/unrolled to bring the sensor into contact with the matter 50, is used to determine the height of the matter/waste 50 - i.e. the fill level in the reservoir.

The fill level sensor assembly 100 is mounted to the reservoir (here a waste tank 1) at a location whose distance from the bottom 11 of the tank is known. In the example shown, the assembly is mounted to the top 12 of the tank, extending into the tank interior 10. Other locations are possible.

The fill level sensor assembly will be described further below but, in brief, Fig. 2A shows the assembly in a non-active state where the tape and the sensor are contained within, e.g. rolled up in the housing 104 of the assembly and are not measuring a fill level. In this position, the sensor 101 and tape 102 are protected, in the housing, from damage due to contaminants or impact from e.g. debris or caustic or corrosive matter.

To measure the level of matter 50 in the tank 1, the assembly is activated to release the sensor 101 from the housing 104 by releasing e.g. unrolling the tape 102 hence lowering the sensor 101 into the tank interior 10 until it contacts the surface of the matter 50 while the first end 102a of the tape remains affixed to the holder in the housing.

Fig. 2B shows an example where the surface of the matter is at a first, relatively low level L. The tape 102 is extended e.g. unrolled from the housing e.g. by rotating the roller around which the tape is wrapped, in this example, until the sensor at the second end 102b contacts the matter 50 at a distance L from the bottom 11 of the tank. The height of L can be determined from the distance the sensor 101 has travelled from the holder/roller 103 to the matter 50 at L. The distance is determined from a measure of the length of the tape that has been released/unrolled from the housing since the tape was in the non-active state.

Fig. 2C illustrates the situation when the level of matter 50 has risen to a higher fill level H. As can be seen, the length of tape 102, here indicated by X, is less than in Fig. 2B. The height of level H, indicated by Y, can be determined by subtracting X from the distance from the holder 103 to the bottom 11 of the tank. There are various means and methods for measuring the length of unrolled/deployed tape, as discussed further below, but the assembly requires some means for determining the length.

In some examples, the sensor 101 can remain on the surface of the matter 50 as the level rises and the length, or change in length, of deployed tape can be continuously monitored to determine the current fill level. In other examples, though, the sensor assembly is activated - i.e. the sensor and tape are extended and lowered into contact with the matter 50 - when needed. In-between measurements, the sensor and tape can be rolled back up or otherwise re-stowed into the housing to the non-activated state such as shown in Fig. 2A, to protect the tape and sensor and to reduce power consumption. For example, in a sanitation system, the sensor can be activated to measure the grey water level after each flush or after a given number of flushes or at predetermined intervals of time, or the like and is otherwise inside the housing in the non-activated state. If the sensor is returned to the non-activated state between measurements, there is an overall reduction in power consumption compared to the sensor being constantly deployed.

The solution provided here is not limited to any particular type of sensor, and any type of sensor suitable for identifying the presence of matter/detecting fluids can be used, such as (but not exclusively) the PLS mentioned above.

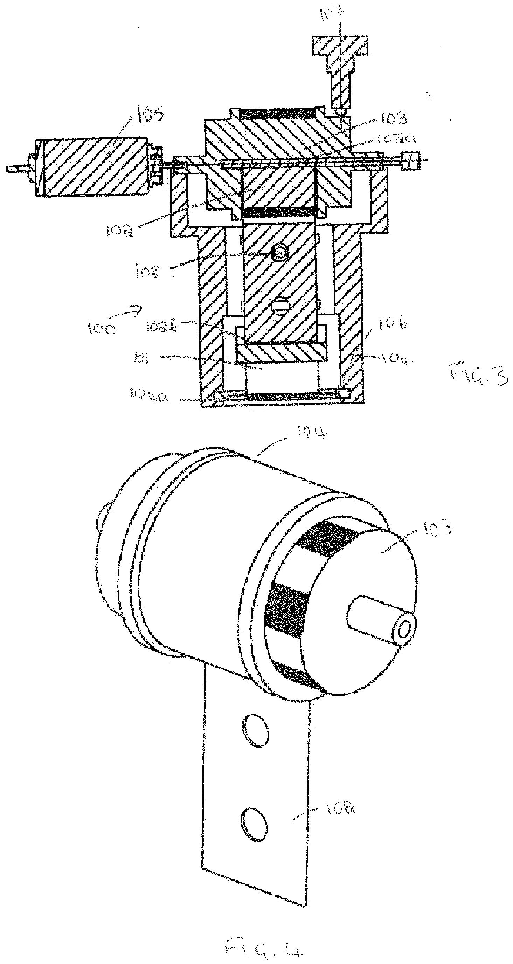

An example of a fill level sensor assembly according to this disclosure will be described in more detail with reference to Figs. 3 to 8.

In the example show in Fig. 3, the holder 103 that holds a first end 102a of the tape in the housing 104, is a roller 103 mounted in the housing 104. The roller 103 is driven by a small electric motor 105, although other drives are conceivable. The tape 102 is attached, at the first end 102a to the roller 103, and the sensor 101 is attached to the other end 102b of the tape 102. Rotation of the roller 103 in one direction winds the tape 102 around the roller 103. Rotation of the roller in the opposite direction unwinds the tape from the roller to lower the sensor 101 into the tank 1. In one example, the tape 102 may be made of/coated with Teflon^{®} to allow it to smoothly unroll and to avoid matter sticking to the tape. In the non-activated state, the tape is fully wound around the roller and the sensor 101 is accommodated inside the housing 104. It is envisaged that the tape can be held/stowed within the housing by a holder other than a roller, and that the tape is otherwise gathered into and retained in the housing in the non-activated state and released in a manner other than unrolling. In the examples described here, though, the holder is a roller, and the tape is wound onto the roller for stowing in the housing and then released by unrolling.

Power may be provided to the sensor 101 in various ways e.g. the sensor may have its own battery or integral power supply or may be connected to an external power supply by e.g. wires routed through the tape 102.

The end 104a of the housing 104 from which the tape and sensor are deployed may be provided with means for preventing contaminants/debris entering the housing. In one example, a sleeve 106 e.g. of rubber or other flexible/resilient material, is provided at the end of the housing. This may be provided with one or more slots that part to allow the sensor/tape to pass through and then close up again to close the housing. The slots may be configured to wipe along the sensor/tape as they pass through the slots, to wipe the sensor and tape clean as it re-enters the housing after performing level measurement, to prevent ingress of debris into the housing.

The means for measuring the length of deployed/unrolled tape 102 when the sensor 101 contacts the matter 50 at the fill level may also be located in the housing and can be implemented in various ways.

In the example shown in Fig. 3, the measurement means comprises two optical sensors 107, 108 which detect features of the tape to determine the deployed tape length X. In other examples, only a single sensor may be used.

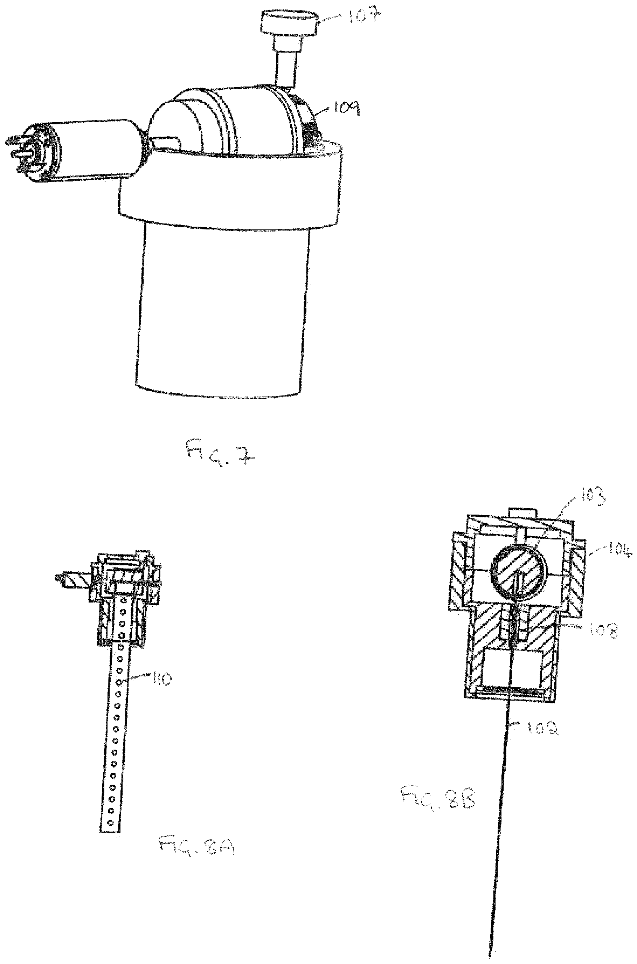

Two possible implementations of the tape length measurement means are described with reference to Figs. 7 and 8.

In the example shown in Fig. 7, a pattern 109 of markings, e.g. a pattern of black and white lines or rectangles or gradations, or a pattern of shades or colours is provided around the roller and the change in pattern is detected by an optical sensor 107 as the roller rotates. The optical sensor 107 includes a decoder, as known in the art, to provide a distance measurement corresponding to the amount and direction of rotation of the roller, to calculate the length of tape that has unrolled. In an alternative example, the pattern could be provided on the tape and detected by the sensor as the tape unrolls.

In the example of Figs. 8A and 8B, the tape 102 is provided with a number of holes 110 along its length. A sensor 108 detects and counts the holes that pass the sensor by transmitting light from a sensor transmitter on one side of the tape and detecting the light as it passes through the holes by a sensor receiver on the other side of the tape, as the tape is unrolled. The number of holes that pass the sensor is decoded to provide the length X of unrolled tape.

The fill level sensor assembly of this disclosure is, therefore, able to measure a full range of fill levels, as required. The assembly is simple, lightweight, easy to assemble, use and maintain. Power consumption is low and the assembly is less liable to damage and so has longer life. The fill level sensor assembly according to the disclosure can be easily assembled to existing tanks or containers.

## Claims

1. A fill level sensor assembly for detecting a level of content in a reservoir (1), the assembly comprising: a housing (104) configured to be mounted to the reservoir; a tape (102) having a length from a first end (102a) to a second end (102b); a holder (103) in the housing for securing the first end of the tape in the housing; a level sensor (101) attached to the second end of the tape; the tape configured to be stowed with the first and second ends and the level sensor in the housing, in a first state, and to be deployed to release the second end and the sensor and a portion of the length of the tape from the housing; and measuring means (107, 108) to measure the length of the released portion of the length of the tape.

2. The assembly of claim 1, wherein the holder comprises a roller (103) to which the first end (102a) of the tape (102) is attached, wherein rotation of the roller in a first direction winds the length of the tape around the roller to stow the tape and level sensor (101) in the housing and rotation of the roller in the opposite direction unwinds the tape to deploy the level sensor (101) from the housing (104).

3. The assembly of claim 2, further comprising a drive (105) to cause rotation of the roller (103).

4. The assembly of claim 3, wherein the drive comprises an electric motor (105).

5. The assembly of any preceding claim, wherein the measuring means comprises a sensor (107, 108) configured to sense features on the holder and/or the tape indicative of a length of tape deployed.

6. The assembly of claim 5, wherein the measuring means comprises an optical sensor.

7. The assembly of claim 6, wherein the features comprise markings on the holder and/or on the tape.

8. The assembly of claim 6, wherein the features comprise holes along the length of the tape.

9. The assembly of any preceding claim, wherein the level sensor (101) is configured to provide a sense indication when in contact with matter (50) in the reservoir.

10. The assembly of any preceding claim, wherein the level sensor (101) is an ultrasonic transceiver.

11. The assembly of any preceding claim, wherein the first state is a non-actuated state where the sensor does not consume power.

12. The assembly of any preceding claim, further comprising wires routed along the tape to the level sensor to provide power to the level sensor.

13. A reservoir for receiving and storing content, the reservoir including a fill level sensor assembly as claimed in any preceding claim, mounted to the reservoir such that the sensor is deployed into the reservoir to detect a level of the content.

14. The reservoir of claim 13, being a tank for collection of waste.

15. The reservoir of claim 14, being a waste collection tank of an aircraft sanitation system.
